# EUROPÄISCHE PATENTSCHRIFT

(11) **EP 1 239 194 B1**
(45) Veröffentlichungstag und Bekanntmachung des Hinweises auf die Patenterteilung: **16.05.2007**
(21) Anmeldenummer: 02005118.1
(22) Anmeldetag: 07.03.2002
(51) Int. Cl.: F16H 61/28, F16H 61/30

(54) **Vorrichtung und Verfahren zur Gassenwahl bei einem Getriebe**
Device and method for shift path selection in a transmission
Dispositif et procédé pour la sélection de couloir d'un rapport de vitesses d'une transmission

(30) Priorität: 07.03.2001 DE 10110981
(43) Veröffentlichungstag der Anmeldung: 11.09.2002
(73) Patentinhaber: HYDRAULIK-RING GMBH, 97828 Marktheidenfeld (DE)
(72) Erfinder: Meyer, Roland, 91154 Roth (DE); Wild, Andreas, 72669 Unterensingen (DE); Schmidt, Thomas, 93049 Regensburg (DE); Weigert, Wolfgang, 93105 Tegernheim (DE)
(74) Vertreter: Cremer, Ulrike Theresia

(56) Entgegenhaltungen:
- DE-A1- 4 320 353
- DE-A1- 19 931 973
- PATENT ABSTRACTS OF JAPAN Bd. 1998, Nr. 10, 31. August 1998 (1998-08-31) & JP 10 141499 A (ISUZU MOTORS LTD), 29. Mai 1998 (1998-05-29)

## Beschreibung

Die vorliegende Erfindung betrifft eine Vorrichtung zur Gassenwahl bei einem Getriebe, insbesondere bei AMT-Systemen (automatic manual transmission), sowie ein Verfahren zur Gassenwahl bei einem Getriebe, entsprechend dem Oberbegriff der Ansprüche 1 und 12.

Bei sogenannten automatisierten Handschaltgetrieben (AMT) werden die Gänge des Getriebes mit Hilfe eines elektro-hydraulischen Aktuators eingelegt. Der Aktuator für ein Getriebe mit H-Schaltung ist dabei aus mehreren Kolben und entsprechender Mechanik aufgebaut, um eine Gangbewegung und/oder eine Gassenbewegung auszuführen.

Ein derartige Aktuator ist beispielsweise aus der DE 199 31 975 A1 bekannt. Hierbei wird eine kompliziert aufgebaute Einheit bestehend aus Stelleinrichtungen, Sensoren und Ventileinrichtungen vorgeschlagen, um einen Schaltfinger in einer Schaltgasse des Getriebes zu verschieben.

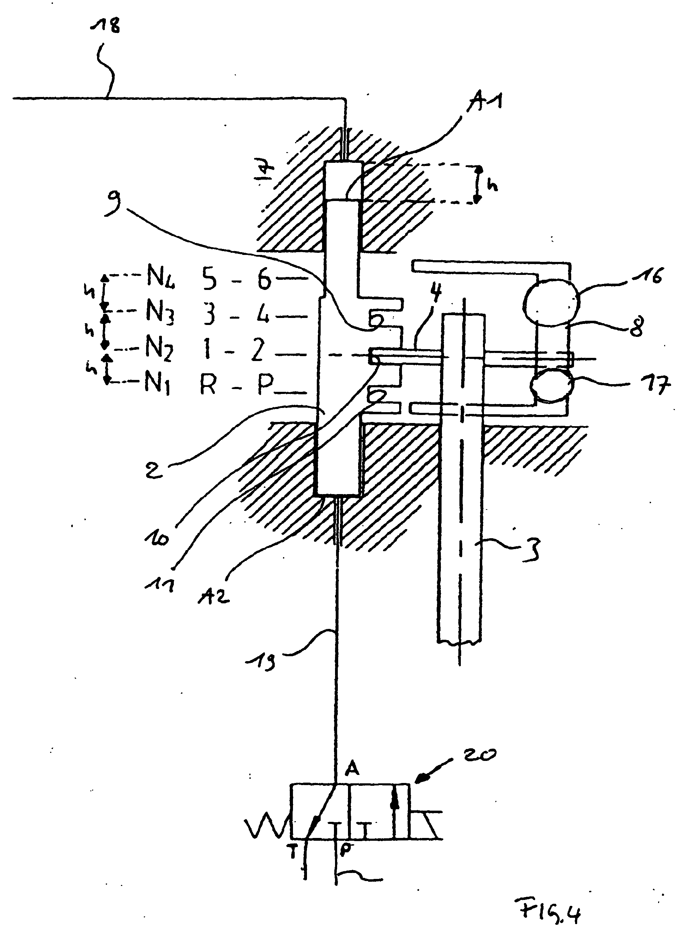

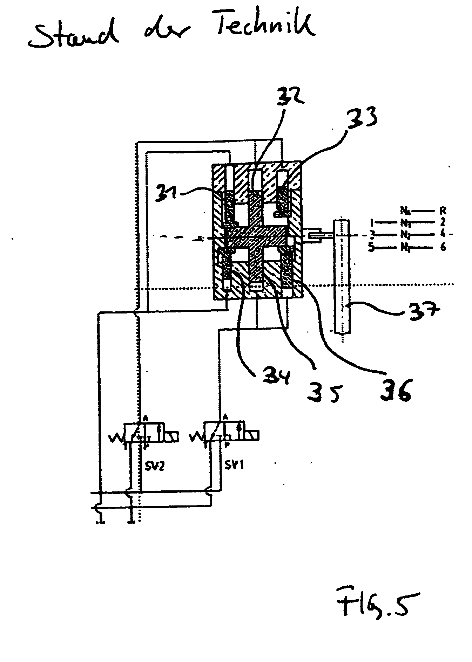

In Figur 5 ist ein anderer Gassenwahlaktuator dargestellt. Wie in Figur 5 gezeigt, umfasst der Aktuator sechs Kolbenelemente 31, 32, 33, 34, 35 und 36, um die Schaltstange 37 in einer der Getriebegassen N1, N2, N3 oder N4 zu positionieren. Die Stellung der Kolbenelemente 31 bis 36 wird dabei durch Ansteuerung von zwei Schaltventilen SV1 und SV2 bestimmt. Ein derartiger Aktuator erfordert eine komplizierte mechanische Ausführung und weist eine Vielzahl von Bauteilen auf. Dadurch ergibt sich ein erhöhter Fertigungsaufwand und ein weit verzweigtes Hydraulikleitungssystem. Weiterhin muss eine Steuerung vorgesehen werden, um die beiden Schaltventile SV1 und SV2 zu steuern.

[0004a] Aus der gattungsgemäßen JP-A-10 14 14 99 (Isuzu Motors LTD.) ist ein Automatikgetriebe bekannt, das mit einer aus mehreren Kolben stammender Kräfteüberlagerung die Position des Aktuators einstellt.

Es ist daher Aufgabe der vorliegenden Erfindung, eine Vorrichtung sowie ein Verfahren zur Gassenwahl bereitzustellen, welche bei einfachem Aufbau und einfacher, kostengünstiger Herstellbarkeit eine sichere und zuverlässige Gassenwahl ermöglichen.

Diese Aufgabe wird durch einen Aktuator zur Gassenwahl mit den Merkmalen des Patentanspruchs 1 bzw. ein Verfahren zur Gassenwahl mit den Merkmalen des Patentanspruchs 13 gelöst. Vorteilhafte Weiterbildungen sind jeweils Gegenstand der Unteransprüche.

Dadurch ist der erfindungsgemäße Gassenwahlaktuator sehr einfach aufgebaut, da die Wahl der Gasse nur mit einer einzigen Ventileinrichtung realisiert werden kann. Hierbei ist weiterhin nur eine Gassenwahleinrichtung erforderlich, welche durch das einzige Ventil gesteuert wird und welche nur eine axiale hin-und-herBewegung ausführen muss, um den Gassenwechsel durchzuführen. Somit weist der erfindungsgemäße Aktuator zur Gassenwahl eine geringe Anzahl von Bauteilen auf, woraus ein geringer Fertigungsaufwand und ein geringer Montageaufwand resultiert. Dadurch kann der erfindungsgemäße Aktuator zur Gassenwahl deutlich kostengünstiger hergestellt werden als im Vergleich mit den bisher verwendeten Gassenwahlaktuatoren. Durch die geringe Anzahl von Bauteilen kann auch die Zuverlässigkeit des Systems verbessert werden. Da weiterhin nur eine Ventileinrichtung verwendet wird, ergeben sich auch Einsparungen auf der Elektronikseite und beim Kabelbaum, da nur noch die eine Ventileinrichtung angesteuert werden muss. Überdies benötigt das erfindungsgemäße System keinen Sensor, da die Stellung der Gassenwahleinrichtung einfach durch die Stellung der Ventileinrichtung bestimmt werden kann. Somit ist auch kein Ersatzsensor zwingend notwendig, welcher bei Ausfall des Sensors einen Notbetrieb aufrecht erhalten kann. Da nach der Gassenwahl die Gassenwahleinrichtung und der Schaltfinger vollständig ausser Eingriff sind, ist auch sichergestellt, dass bei eingelegtem Gang keinerlei Kräfte durch den Gassenaktuator auf das Getriebe ausgeübt werden kann. Dadurch kann die Lebensdauer des Getriebes erhöht werden.

Vorzugsweise ist die Gassenwahleinrichtung als Kolben ausgebildet, welcher mit einem Druckmedium beaufschlagbar ist. Dabei kann der Kolben einfach in einem Gehäuse geführt werden und einen einfachen Aufbau aufweisen. Die Ansteuerung des Kolbens erfolgt dabei über die Ventileinrichtung, welche das Druckmedium dem Kolben zuführt. Als Druckmedium wird dabei bevorzugt eine Hydraulikflüssigkeit verwendet.

Besonders bevorzugt ist der Kolben als doppelt wirkender Kolben ausgebildet. Dabei steuert die Ventileinrichtung den Kolben abhängig von der Stellung des Kolbens auf einer bestimmten Kolbenseite an. Vorzugsweise weist der Kolben zwei Kolbenflächen mit unterschiedlich großen Flächen auf. Dadurch ist es möglich, dass der Kolben an beiden Flächen mit einem gleich hohen Steuerdruck beaufschlagt werden kann und der Kolben immer eine definierte Position einnimmt.

Vorteilhaft sind an der Gassenwahleinrichtung Aussparungen für einen Eingriff mit dem Schaltfinger ausgebildet. Dadurch kann eine formschlüssige Verbindung zwischen der Gassenwahleinrichtung und dem Schaltfinger bereitgestellt werden.

Vorzugsweise sind die Aussparungen derart an der Gassenwahleinrichtung angeordnet, dass der Schaltfinger mittels einer Schwenkbewegung in die Gassenwahleinrichtung eingreifen kann. Dies ermöglicht einen einfachen und sicheren Bewegungsablauf beim Eingreifen und Lösen der Gassenwahleinrichtung vom Schaltfinger.

Bevorzugt kann der Schaltfinger in zwei Richtungen in und aus der Gassenwahleinrichtung schwenken. Dadurch können die einzelnen Gänge durch eine direkte Schwenkbewegung aus der Gassenwahleinrichtung eingelegt werden. Somit kann eine besonders kompakte Bauart bereitgestellt werden.

Vorzugsweise ist die Anzahl der an der Gassenwahleinrichtung gebildeten Aussparungen um eins kleiner als die Anzahl der Gassen des Getriebes. D.h., wenn das Getriebe z.B. vier Gassen aufweist, weist die Gassenwahleinrichtung drei Aussparungen auf. Damit kann die Baugröße der Gassenwahleinrichtung klein gehalten werden.

Bevorzugt entspricht die Hubhöhe des Kolbens (Gassenwahleinrichtung) dem Abstand von zwei zueinander benachbarten Gassen des Getriebes. Dies gewährleistet, dass der Schaltfinger bzw. die Schaltstange immer genau um eine weitere Gasse bewegt wird.

Um eine zusätzliche Sicherheitseinrichtung betreffend die Position der Gassenwahleinrichtung aufzuweisen, ist vorzugsweise ein Sensor vorgesehen, um die Position der Gassenwahleinrichtung zu bestimmen. Wie vorher schon erläutert wurde kann die Position der Gassenwahleinrichtung erfindungsgemäß einfach auch durch die Stellung der Ventileinrichtung bestimmt werden.

Um bei einem Schaltvorgang auch ein Überspringen von Gassen zu ermöglichen, ist der Schaltfinger in eine Zwischenposition bringbar, in welcher er sich sowohl mit der Gassenwahleinrichtung als auch dem Getriebe ausser Eingriff befindet. Dies ermöglicht es, dass die Gassenwahleinrichtung wieder in ihre andere Position (Ausgangsposition) zurück gestellt werden kann und der Schaltfinger anschließend wieder mit der Gassenwahleinrichtung in Eingriff gebracht wird und durch Bewegung der Gassenwahleinrichtung in die nächste Gasse bewegt wird. Dadurch kann beim Schaltvorgang eine Gasse übersprungen werden, ohne dass in der übersprungenen Gasse ein Gang hätte eingelegt werden müssen.

Vorzugsweise ist die Ventileinrichtung als 3/2-Wegeventil ausgebildet. Dadurch kann sie einfach und kostengünstig hergestellt werden und ermöglicht eine einfache und zuverlässige Steuerung.

Gemäß dem erfindungsgemäßen Verfahren zur Gassenwahl bei einem Gangsteller für ein automatisiertes Handschaltgetriebe wird in einem ersten Schritt eine in einer Achse hin und her bewegbare Gassenwahleinrichtung festgestellt. Die Gassenwahleinrichtung kann dabei nur zwei Positionen einnehmen. Gegebenenfalls erfolgt nun eine Positionierung der Gassenwahleinrichtung, wenn die augenblickliche Position nicht der gewünschten Ausgangsposition entspricht. Die Positionierung erfolgt dabei abhängig von der beabsichtigten nächsten Gassenwahl (d.h. in welcher Richtung liegt die nächste Gasse, in welcher der gewünschte Gang liegt). In einem zweiten Schritt wird eine Schaltstange über einen Schaltfinger mit der Gassenwahleinrichtung verbunden, d.h. in Eingriff gebracht. In einem dritten Schritt wird der Gassenwahleinrichtung mit der Schaltstange in die zweite Position (Zielposition) bewegt. Somit ist die Schaltstange in einer benachbarten Gasse zur ursprünglichen Ausgangsgasse positioniert. In einem vierten Schritt wird die Schaltstange mit der Gassenwahleinrichtung ausser Eingriff gebracht. Hierzu wird der Schaltfinger aus der Gassenwahleinrichtung bewegt und der gewünschte Gang eingelegt. Dabei wird das Bewegen der Gassenwahleinrichtung nur mittels genau einer Ventilvorrichtung ausgeführt. Mit dem erfindungsgemäßen Verfahren kann somit ein Prinzip eines Gassenaktuators verwirklicht werden, bei dem eine Gasse nur unter Verwendung von zwei Bewegungsrichtungen ausgewählt wird. Die Bewegungsrichtungen liegen dabei auf einer Achse und die Gassenwahleinrichtung wird jeweils in entgegengesetzen Richtungen auf der Achse bewegt. Dadurch kann der Vorgang der Gassenwahl deutlich vereinfacht werden.

Um eine sichere Bewegung zwischen Gassenwahleinrichtung und Schaltfinger zu ermöglichen, ist die Schaltstange vorteilhaft mittels einer Schwenkbewegung mit der Gassenwahleinrichtung in Eingriff und ausser Eingriff bringbar.

Vorzugsweise ist die Gassenwahleinrichtung als beidseitig wirkender Kolben mit zwei Kolbenflächen ausgebildet. Dies ermöglicht eine besonders einfache Ansteuerung der Gassenwahleinrichtung. Besonders bevorzugt werden die beiden Kolbenflächen mit dem gleichen Steuerdruck beaufschlagt, wobei die beiden Kolbenflächen unterschiedlich groß ausgebildet sind. Dies ermöglicht eine besonders einfache Steuerung der erfindungsgemäßen Vorrichtung zur Gassenwahl.

Nachfolgend wird die Erfindung anhand eines bevorzugten Ausführungsbeispiels in Verbindung mit der Zeichnung beschrieben. In der Zeichnung ist:
- Figur 1: eine schematische perspektivische Teilansicht eines Gassenwahlaktuators gemäß einem Ausführungsbeispiel der vorliegenden Erfindung,
- Figur 2: eine andere schematische perspektivische Teilansicht des in Figur 1 gezeigten Gassenwahlaktuators,
- Figur 3: ein schematischer Hydraulikschaltplan des in Figur 1 und 2 gezeigten Gassenwahlaktuators,
- Figur 4: eine schematische Seitenansicht des erfindungsgemäßen Gassenwahlaktuators gemäß dem Ausführungsbeispiel und
- Figur 5: eine schematische Ansicht eines Gassenwahlaktuators gemäß dem Stand der Technik.

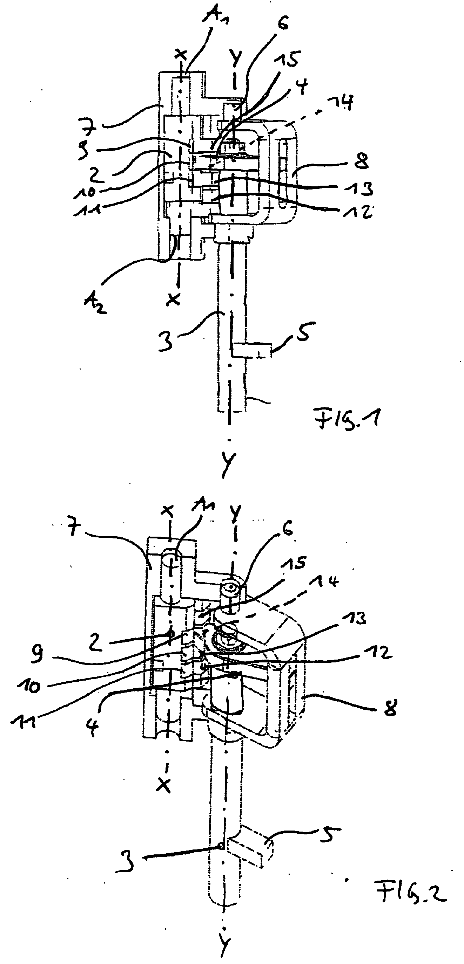

Nachfolgend wird unter Bezugnahme auf die Figuren 1 bis 4 ein Ausführungsbeispiel gemäß der vorliegenden Erfindung beschrieben.

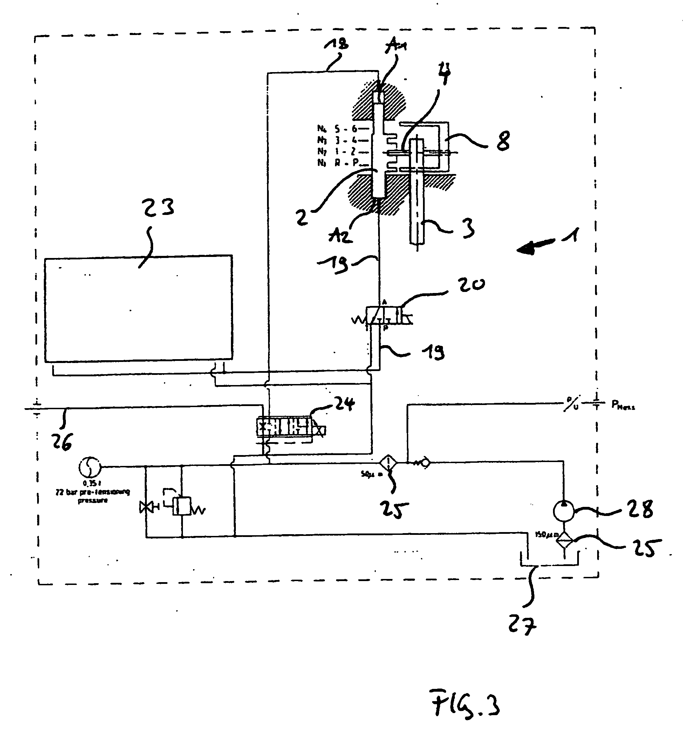

Wie insbesondere aus Figur 3 ersichtlich ist, umfasst der Aktuator 1 zur Gassenwahl gemäß dem Ausführungsbeispiel der vorliegenden Erfindung einen Gassenkolben 2 sowie genau eine Ventileinrichtung 20. Die Ventileinrichtung 20 ist als 3/2-Wegeventil ausgebildet und weist einen Anschluß P für einen Systemdruck, einen Anschluß T zum Tank und einen Anschluß A zum Gassenkolben 2 auf.

Der Gassenkolben 2 weist an einem mittleren Bereich drei Aussparungen 9, 10 und 11 auf (vgl. Figur 4). Der Gassenkolben 2 ist als doppelt wirkender Kolben ausgebildet und weist an seinen beiden Enden in Längsrichtung des Kolbens zwei Arbeitsflächen A1 und A2 auf. Wie in Figur 4 gezeigt, ist die Arbeitsfläche A1 dabei kleiner als die Arbeitsfläche A2. Vorzugsweise ist die Arbeitsfläche A1 nur halb so groß wie die Arbeitsfläche A2. Die beiden Kolbenenden des Gassenkolbens 2 sind dabei in zylinderartigen Ausnehmungen in einem Gehäuse 7 geführt.

Wie aus den Figuren 1 und 2 ersichtlich ist, ist der Gassenkolben 2 in seiner Längsrichtung auf einer Achse X-X hin und her bewegbar. Dabei kann der Gassenkolben 2 zwei Positionen einnehmen, nämlich eine erste Position, in welcher der Gassenkolben oben angeordnet ist und eine zweite Position, in welcher der Gassenkolben unten angeordnet ist. Zur exakten Positionierung kann dabei jeweils ein Anschlag für jede Bewegungsrichtung vorgesehen werden. Im vorliegenden Ausführungsbeispiel dienen die zylinderartigen Ausnehmungen im Gehäuse 7 als Anschlag. Der Kolben weist dabei eine Hubhöhe h auf (vgl. Figur 4).

Weiterhin ist eine Schaltstange 3 vorgesehen, welche einen Schaltfinger 4 aufweist, der an ihrem einen Ende befestigt ist. Die Schaltstange 3 ist schwenkbar um eine Achse Y-Y gelagert, so dass der Schaltfinger 4 durch Schwenken mit dem Gassenkolben 2 in Eingriff und ausser Eingriff bringbar ist. Die Lagerung der Schaltstange 3 erfolgt dabei mittels eines Bügels 8 welcher über einen Zapfen 6 im Gehäuse 7 des Gassenwahlaktuators 1 gelagert ist. An der Schaltstange 3 ist weiterhin ein Ansatz 5 vorgesehen, welcher mit einer Schalthebelmechanik verbindbar ist.

Wie insbesondere in Figur 2 gezeigt, sind benachbart zum Gassenkolben 2 die Gangstellungsebenen 12, 13, 14 und 15 angeordnet, in denen die Gänge eingelegt sind. Die eingelegten Gangstellungen sind dabei beidseitig des Gassenkolbens 2 angeordnet. Die Gangstellungsebenen 12, 13, 14 und 15 befinden sich dabei jeweils in einer unterschiedlichen Gasse N1, N2, N3 und N4 des Getriebes.

Genauer, wie insbesondere in Figur 4 ersichtlich ist, befinden sich der Rückwärtsgang R und die Parkstellung P in der ersten Gasse N1 (Ebene 12), der erste Gang 1 und der zweite Gang 2 befinden sich in der zweiten Gasse N2 (Ebene 13), der dritte Gang 3 und der vierte Gang 4 befinden sich in der dritten Gasse N3 (Ebene 14) und der fünfte Gang 5 sowie der sechste Gang 6 befinden sich in der vierten Gasse N4 (Ebene 15). Die Stellungen der eingelegten Gänge befinden sich dabei jeweils rechts und links des Gassenkolbens 2. Der Abstand der einzelnen Gassen N1, N2, N3 und N4 voneinander entspricht dabei jeweils der Hubhöhe h (vgl. Figur 4). Ebenso entspricht der Abstand der jeweils benachbarten Aussparungen 9, 10 und 11 der Hubhöhe h.

Um über den Schaltfinger 4 jeweils in den gewünschten Gang einzulegen, wird der Schaltfinger 4 über Betätigungskolben 16 und 17 bewegt, welche am Bügel 8 angreifen. Dabei sind zu beiden Seiten des Bügels 8 mehrere Betätigungskolben vorgesehen. Es sei angemerkt, dass anstelle von mehreren Betätigungskolben auf jeder Seite je ein Arbeitskolben und auf einer Seite ein Hilskolben verwendet werden kann. In Figur 1 befindet sich der Schaltfinger 4 mit der Aussparung 10 des Gassenkolbens in der Gangstellungsebene 14 im Eingriff. In Figur 2 ist der Schaltfinger in einem Gang in der Gangstellungsebene 14 eingelegt. In den Figuren 3 und 4 befindet sich der Schaltfinger 4 im Eingriff mit der Aussparung 10 des Gassenkolbens 2.

Wie aus dem in Figur 3 gezeigten schematischen Hydraulikschaltplan ersichtlich ist, wird Hydrauliköl, welches im vorliegenden Ausführungsbeispiel als Druckmedium verwendet wird, von einem Tank 27 über eine Pumpe 28, Filtereinrichtungen 25 und ein Kupplungsventil 24 in eine Leitung 18 und eine Leitung 19 des Gassenwahlaktuators 1 zugeführt. Die einzige Ventileinrichtung 20 des Aktuators ist dabei in der Leitung 19 angeordnet. Die Leitung 18 ist mit der Kolbenfläche A1 verbunden und die Leitung 19 ist mit der Kolbenfläche A2 verbunden. Somit werden beide Kolbenflächen A1 und A2 des Gassenkolbens 2 mit dem gleichen Hydrauliksteuerdruck beaufschlagt. Das Kupplungsventil 24 dient dabei nur zur Druckversorgung des Gassenaktuators und hat keine Funktion für die Betätigung des Gassenaktuotors. Weiterhin wird ein Kupplungszylinder über eine Leitung 26 und eine Vorrichtung 23 (Gangaktuator) zum Einlegen und Auslegen der Gänge mit Hydraulikdruck versorgt.

Nachfolgend wird die Funktionsweise des erfindungsgemäßen Gassenwahlaktuators beschrieben.

Vor Beginn eines Gangwechsels ist der Gassenkolben 2 in eine entsprechende Lage zu bringen. D.h., wenn ein Gassenwechsel nach unten (in den Figuren in Richtung der Kolbenfläche A2) gewünscht ist, muss der Gassenkolben 2 in seiner oberen ersten Stellung angeordnet sein. Wenn ein Gassenwechsel nach oben (in den Figuren in Richtung der Kolbenfläche A1) gewünscht ist, muss der Gassenkolben 2 in seiner unteren zweiten Stellung angeordnet sein.

Wenn für ein Einlegen eines anderen Ganges eine Gassenänderung in der Getriebevorrichtung notwendig ist, wird von einer Steuerung der Gassenkolben 2 mitels Ansteuern des Ventils 20 in die Position gebracht, die anschließend eine Bewegung des Gassenkolbens in die gewünschte Richtung zulässt. Wenn nun die Bewegungsrichtung des Gassenkolbens mit der Richtung übereinstimmt, in welcher die nächste gewünschte Gasse liegt, wird der Schaltfinger 4 der Schaltstange 3 in eine der im Gassenkolben 2 vorgesehenen Aussparungen 9, 10 oder 11 geschwenkt. In welche der Aussparungen 9, 10 oder 11 der Schaltfinger 4 dabei geschwenkt wird, hängt davon ab, in welcher der Gassen N1 bis N4 der Schaltfinger 4 augenblicklich positioniert ist.

Wenn sich der Schaltfinger 4 mit dem Gassenkolben 2 in Eingriff befindet, wird das Ventil 20 umgeschaltet, so dass sich der Gassenkolben 2 in Richtung X-X in seine andere Position bewegt. Dadurch wird der Schaltfinger 4 in der nächsten Gasse positioniert. Anschließend wird der Schaltfinger 2 aus dem Gassenkolben 4 nach links oder rechts herausgeschwenkt und dadurch der nächste Gang im Getriebe eingelegt. Ob der Schaltfinger nach links oder nach rechts herausgeschwenkt wird, hängt davon ab, an welcher Seite des Gassenkolbens 2 der nächste gewünschte Gang angeordnet ist.

Da nach dem Einlegen des Ganges der Schaltfinger 4 vollständig von dem Gassenkolben 2 ausser Eingriff gebracht ist, wird erfindungsgemäß sichergestellt, dass keinerlei Kräfte durch die Gassenaktuatorik auf das Getriebe wirken.

Die Gassenwahl kann dabei erfindungsgemäß nur durch Schalten einer einzigen Ventileinrichtung 20 erfolgen. Da die Arbeitsflächen A1 und A2 des Gassenkolbens 2 unterschiedliche große Flächen aufweisen, kann der Kolben an beiden Seiten mit dem gleichen Steuerdruck beaufschlagt werden. Erfindungsgemäß wird daher nur die Bewegung des Gassenkolbens kodiert. Da der Gassenkolben jedoch nur zwei Bewegungsrichtungen aufweist (nach oben und nach unten), ist eine Ventileinrichtung 20 ausreichend. Im Gegensatz dazu wird im Stand der Technik die Position der Schaltstange kodiert (vier mögliche Positionen), was zu einer Vielzahl von notwendigen Ventilen und einer aufwändigen Steuerung führt. Somit weist der erfindungsgemäße Aktuator nur eine Ventileinrichtung 20 und einen Kolben 2 auf. Dadurch kann die Anzahl der Bauteile im Vergleich mit dem Stand der Technik deutlich reduziert werden und die Steuerung des Aktuators in großem Umfang vereinfacht werden. Weiterhin wird ein geringeres Gewicht sowie eine höhere Zuverlässigkeit erreicht, da weniger Bauteile vorhanden sind und ein geringerer Aufwand für die Hydraulik notwendig ist. Weiter kann erfindungsgemäß auf eine aufwändige Sensorik verzichtet werden.

Ein besonderer Vorteil der Erfindung ist somit, dass ein Schalten auch ohne Verwendung eines Sensors möglich ist. Ein Sensor ist nur als Sicherheitseinrichtung zum Überwachen des Ganges erforderlich. Auch bei einem Ausfall des Sensors kann erfindungsgemäß weitergefahren werden.

Wenn für den Schaltfinger 4 weiterhin eine Parkstellung in den Gassen N2 und N3 vorhanden ist, in welcher sich der Schaltfinger weder mit dem Gassenkolben in Eingriff befindet noch der Gang eingelegt ist (eine Synchronisation des Getriebes ist noch nicht erfolgt), kann pro Schaltvorgang auch eine oder mehrere Gassen übersprungen werden. Hierbei wird der Gassenkolben 2 erneut positioniert, wenn sich der Schaltfinger 4 in der Parkstellung befindet. Für die erste Gasse N1 und die letzte Gasse N4 müssen keine Parkstellungen vorgesehen werden, da ausgehend von diesen Gassen die nächsten Gassen jeweils nur in einer bestimmten Richtung angeordnet sind.

Zusammenfassend betrifft die vorliegende Erfindung einen Gassenwahlaktuator sowie ein Verfahren zu Gassenwahl in einem Getriebe. Der Gassenwahlaktuator weist genau einen doppelt wirkenden Gassenkolben 2 und eine Ventileinrichtung 20 auf und kann mit einem gemeinsamen Steuerdruck gesteuert werden. Ein Schaltfinger 4 einer Schaltstange 3 kann mit dem Gassenkolben 2 in und ausser Eingriff gebracht werden. Die Stellung und die Bewegung des Gassenkolbens 2 wird dabei nur durch die Ventileinrichtung 20 bestimmt.

Die vorhergehende Beschreibung des Ausführungsbeispiels gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

## Patentansprüche

1. Aktuator zur Gassenwahl bei einem Gangsteller für ein automatisiertes Handschaltgetriebe umfassend eine Schaltstange (3) mit einem Schaltfinger (4) und einer
Gassenwahleinrichtung (2), welche in einer Achse (X-X) hin- und hergehend bewegbar ist, um eine erste und eine zweite Position einzunehmen, **dadurch gekennzeichnet daß** der Schaltfinger (4) der Schaltstange (3) mit der Gassenwahleinrichtung (2), die Aussparungen (9, 10, 11) für einen Eingriff mit dem Schaltfinger (4) hat, in Eingriff und außer Eingriff bringbar ist
und die Stellung der Gassenwahleinrichtung (2) mittels genau einer Ventileinrichtung (20) **dadurch** bestimmbar ist, dass die Hubhöhe (h) der Gassenwahleinrichtung (2) dem Abstand von zwei zueinander benachbarten Gassen entspricht.

2. Aktuator zur Gassenwahl nach Anspruch 1,
**dadurch gekennzeichnet, dass** die Gassenwahleinrichtung (2) als Kolben ausgebildet ist, welcher mit einem Druckmedium beaufschlagbar ist.

3. Aktuator zur Gassenwahl nach Anspruch 2,
**dadurch gekennzeichnet, dass** der Kolben als doppelt wirkender Kolben ausgebildet ist.

4. Aktuator zur Gassenwahl nach Anspruch 3,
**dadurch gekennzeichnet, dass** der Kolben zwei Kolbenflächen (A1,A2) mit unterschiedlich großen Flächen aufweist.

5. Aktuator zur Gassenwahl nach Anspruch 1 bis 4,
**dadurch gekennzeichnet, dass** die Aussparungen (9, 10, 11) derart an der Gassenwahleinrichtung (2) angeordnet sind, dass der Schaltfinger (4) mittels einer Schwenkbewegung in die Gassenwahleinrichtung (2) eingreifen kann.

6. Aktuator zur Gassenwahl nach einem der Ansprüche 1 bis 5,
**dadurch gekennzeichnet, dass** der Schaltfinger (4) in zwei Richtungen in und aus der Gassenwahleinrichtung (2) schwenken kann.

7. Aktuator zur Gassenwahl nach einem der Ansprüche 5 bis 6,
**dadurch gekennzeichnet, dass** die Anzahl der an der Gassenwahleinrichtung (2) gebildeten Aussparungen (9, 10, 11) um eins kleiner als die Anzahl der Gassen (N1, N2, N3, N4) des Getriebes ist.

8. Aktuator zur Gassenwahl nach einem der Ansprüche 2 bis 7,
**dadurch gekennzeichnet, dass** die Hubhöhe (h) des Kolbens dem Abstand von zwei zueinander benachbarten Gassen entspricht.

9. Aktuator zur Gassenwahl nach einem der Ansprüche 1 bis 8,
**dadurch gekennzeichnet, dass** ein Sensor vorgesehen ist, um einen eingelegten Gang zu identifizieren.

10. Aktuator zur Gassenwahl nach einem der Ansprüche 1 bis 9,
**dadurch gekennzeichnet, dass** der Schaltfinger in eine Zwischenposition bringbar ist, in welcher er sich sowohl mit der Gassenwahleinrichtung (2) als auch dem Getriebe ausser Eingriff befindet.

11. Aktuator zur Gassenwahl nach einem der Ansprüche 1 bis 10,
**dadurch gekennzeichnet, dass** die Ventileinrichtung (20) als 3/2-Wegeventil ausgebildet ist.

12. Verfahren zur Gassenwahl bei einem Gangsteller für ein automatisiertes Handschaltgetriebe umfassend die Schritte
- Positionieren der in einer Achse (X-X) hin- und her bewegbaren Gassenwahleinrichtung (2) in einer ersten Position abhängig von der beabsichtigten nächsten Gassenwahl,
- Verbinden einer Schaltstange (3) mit der Gassenwahleinrichtung (2),
- Bewegen der Gassenwahleinrichtung (2) mit der Schaltstange (3) in eine zweite Position, so dass die Schaltstange (3) in einer benachbarten Gasse positioniert ist, und
- Aussereingriffbringen der Schaltstange (3) mit der Gassenwahleinrichtung (2), um einen Gang einzulegen,
**dadurch gekennzeichnet daß**
das Bewegen der Gassenwahleinrichtung (2) von der ersten in die zweite Position mittels genau einer Ventileinrichtung (20) ausgeführt wird, wobei die Hußhöhe (4) der Gassenwahleinrichtung (2) den Abstand von zwei zueinander benachbarten Gassen entspricht.

13. Verfahren nach Anspruch 12,
**dadurch gekennzeichnet, dass** die Schaltstange (3) mittels einer Schwenkbewegung mit der Gassenwahleinrichtung (2) in Eingriff und außer Eingriff bringbar ist.

14. Verfahren nach Anspruch 12 oder 13,
**dadurch gekennzeichnet, dass** die Gassenwahleinrichtung (2) als beidseitig wirkender Kolben mit zwei Kolbenflächen (A1, A2) ausgebildet ist.

15. Verfahren nach Anspruch 14,
**dadurch gekennzeichnet, dass** die beiden Kolbenflächen mit dem gleichen Steuerdruck beaufschlagt werden, wobei die beiden Kolbenflächen (A1, A2) unterschiedlich groß ausgebildet sind.

## Claims

1. Actuator for shift track selection in a gear control element for an automated manual transmission comprising a selector shaft (3) with a selector finger (4) and a shift track selection device (2) which can reciprocate along an axis (X-X) in order to take up a first and a second position,
**characterized in that** the selector finger (4) of the selector shaft (3) can be engaged with and disengaged from the shift track selection device (2), which has recesses (9, 10, 11) for engagement with the selector finger (4), and the position of the shift track selection device (2) can be determined by means of precisely one valve device (20) due to the lift (h) of the shift track selection device (2) corresponding to the spacing of two adjacent shift tracks.

2. Actuator for shift track selection according to Claim 1,
**characterized in that** the shift track selection device (2) is formed as a piston on which a pressure medium can act.

3. Actuator for shift track selection according to Claim 2,
**characterized in that** the piston is formed as a double-acting piston.

4. Actuator for shift track selection according to Claim 3,
**characterized in that** the piston comprises two piston areas (A1, A2) having areas of different size.

5. Actuator for shift track selection according to Claim 1 to 4,
**characterized in that** the recesses (9, 10, 11) are disposed at the shift track selection device (2) such that the selector finger (4) can engage in the shift track selection device (2) by means of a pivotal movement.

6. Actuator for shift track selection according to any one of Claims 1 to 5,
**characterized in that** the selector finger (4) can pivot in two directions into and out of the shift track selection device (2).

7. Actuator for shift track selection according to any one of Claims 5 to 6,
**characterized in that** the number of recesses (9, 10, 11) formed at the shift track selection device (2) is smaller by one than the number of shift tracks (N1, N2, N3, N4) of the transmission.

8. Actuator for shift track selection according to any one of Claims 2 to 7,
**characterized in that** the lift (h) of the piston corresponds to the spacing of two adjacent shift tracks.

9. Actuator for shift track selection according to any one of Claims 1 to 8,
**characterized in that** a sensor is provided in order to identify an engaged gear.

10. Actuator for shift track selection according to any one of Claims 1 to 9,
**characterized in that** the selector finger can be brought into an intermediate position in which it is disengaged both from the shift track selection device (2) and from the transmission.

11. Actuator for shift track selection according to any one of Claims 1 to 10,
**characterized in that** the valve device (20) is formed as a 3/2-way valve.

12. Method for shift track selection in a gear control element for an automated manual transmission, comprising the steps
- positioning the shift track selection device (2), which can reciprocate along an axis (X-X), in a first position depending upon the intended next shift track selection,
- connecting a selector shaft (3) to the shift track selection device (2),
- moving the shift track selection device (2) with the selector shaft (3) into a second position, so that the selector shaft (3) is positioned in an adjacent shift track, and
- disengaging the selector shaft (3) from the shift track selection device (2) in order to engage a gear,
**characterized in that**
the moving of the shift track selection device (2) from the first into the second position is carried out by means of precisely one valve device (20), wherein the lift (h) of the shift track selection device (2) corresponds to the spacing of two adjacent shift tracks.

13. Method according to Claim 12,
**characterized in that** the selector shaft (3) can be engaged with and disengaged from the shift track selection device (2) by means of a pivotal movement.

14. Method according to Claim 12 or 13,
**characterized in that** the shift track selection device (2) is formed as a double-acting piston with two piston areas (A1, A2).

15. Method according to Claim 14,
**characterized in that** the same control pressure acts on the two piston areas, wherein the two piston areas (A1, A2) are formed so as to be of different size.

## Revendications

1. Actionneur destiné à la sélection de couloir dans le cas d'un sélecteur de vitesse pour une boîte de changement de vitesse manuelle automatisée comprenant une tringle de changement de vitesse (3) avec un doigt de changement de vitesse (4) et un dispositif de sélection de couloir (2), lequel peut aller et venir sur un axe (X-X) afin d'occuper une première et une seconde position,
**caractérisé en ce que** le doigt de changement de vitesse (4) de la tringle de changement de vitesse (3) peut être mis en prise et hors prise avec le dispositif de sélection de couloir (2) qui possède des évidements (9, 10, 11) pour un engrènement avec le doigt de changement de vitesse (4) et la position du dispositif de sélection de couloir (2) peut être déterminée strictement au moyen d'un système de soupape (20) du fait que la hauteur de course (h) du dispositif de sélection de couloir (2) correspond à l'écartement entre deux couloirs adjacents l'un par rapport à l'autre.

2. Actionneur pour la sélection de couloir selon la revendication 1,
**caractérisé en ce que** le dispositif de sélection de couloir (2) est conçu sous la forme d'un piston, lequel peut être alimenté avec un fluide sous pression.

3. Actionneur pour la sélection de couloir selon la revendication 2,
**caractérisé en ce que** le piston est conçu sous la forme d'un piston à double action.

4. Actionneur pour la sélection de couloir selon la revendication 3,
**caractérisé en ce que** le piston présente deux surfaces de piston (A1, A2) avec des surfaces de différentes tailles.

5. Actionneur pour la sélection de couloir selon l'une quelconque des revendications 1 à 4,
**caractérisé en ce que** les évidements (9, 10, 11) sont agencés de telle manière sur le dispositif de sélection de couloir (2) que le doigt de changement de vitesse (4) peut engrener dans le dispositif de sélection de couloir (2) au moyen d'un mouvement de pivotement.

6. Actionneur pour la sélection de couloir selon l'une quelconque des revendications 1 à 5,
**caractérisé en ce que** le doigt de changement de vitesse (4) peut pivoter dans deux directions dans le dispositif de sélection de couloir (2) et hors de celui-ci.

7. Actionneur pour la sélection de couloir selon l'une quelconque des revendications 5 à 6,
**caractérisé en ce que** le nombre d'évidements (9, 10, 11) formés sur le dispositif de sélection de couloir (2) est inférieur d'un au nombre de couloirs (N1, N2, N3, N4) de la boîte de vitesses.

8. Actionneur pour la sélection de couloir selon l'une quelconque des revendications 2 à 7,
**caractérisé en ce que** la hauteur de course (h) du piston correspond à l'écartement entre deux couloirs adjacents l'un par rapport à l'autre.

9. Actionneur pour la sélection de couloir selon l'une quelconque des revendications 1 à 8,
**caractérisé en ce qu'**un capteur est prévu afin d'identifier une vitesse passée.

10. Actionneur pour la sélection de couloir selon l'une quelconque des revendications 1 à 9,
**caractérisé en ce que** le doigt de changement de vitesse peut être mis dans une position intermédiaire, dans laquelle il se trouve hors prise aussi bien avec le dispositif de sélection de couloir (2) qu'avec la boîte de vitesses.

11. Actionneur pour la sélection de couloir selon l'une quelconque des revendications 1 à 10,
**caractérisé en ce que** le système de soupape (20) est conçu sous forme de soupape à 3/2 voies.

12. Procédé de sélection de couloir dans le cas d'un sélecteur de vitesse pour une boîte de changement de vitesse manuelle automatisée comprenant les étapes suivantes :
- positionnement du dispositif de sélection de couloir (2) pouvant aller et venir sur un axe (X-X) dans une première position dépendant de la prochaine sélection de couloir envisagée ;
- raccordement d'une tringle de changement de vitesse (3) avec le dispositif de sélection de couloir (2) ;
- déplacement du dispositif de sélection de couloir (2) avec la tringle de changement de vitesse (3) dans une seconde position de manière à ce que la tringle de changement de vitesse (3) soit positionnée dans un couloir adjacent ; et
- mise hors prise de la tringle de changement de vitesse (3) avec le dispositif de sélection de couloir (2) afin de passer une vitesse ;
**caractérisé en ce que** le déplacement du dispositif de sélection de couloir (2) de la première position dans la seconde est réalisé strictement au moyen d'un système de soupape (20), la hauteur de course (h) du dispositif de sélection de couloir (2) correspondant à l'écartement entre deux couloirs adjacents l'un par rapport à l'autre.

13. Procédé selon la revendication 12,
**caractérisé en ce que** la tringle de changement de vitesse (3) peut être mise en prise et hors prise avec le dispositif de sélection de couloir (2) au moyen d'un mouvement de pivotement.

14. Procédé selon la revendication 12 ou 13,
**caractérisé en ce que** le dispositif de sélection de couloir (2) est conçu sous forme de piston à double action avec deux surfaces de piston (A1, A2).

15. Procédé selon la revendication 14,
**caractérisé en ce que** les deux surfaces de piston sont alimentées avec la même pression de commande, les deux surfaces de piston (A1, A2) étant conçues de différentes tailles.
